(19) Europäisches Patentamt
European Patent Office
Office européen des brevets

(11) EP 4 394 983 A1

(12) **EUROPEAN PATENT APPLICATION**
published in accordance with Art. 153(4) EPC

(43) Date of publication:
**03.07.2024 Bulletin 2024/27**

(21) Application number: **22861142.2**

(22) Date of filing: **09.08.2022**

(51) International Patent Classification (IPC):
***H01M 10/0567*** *(2010.01)* ***H01M 4/36*** *(2006.01)*
***H01M 4/48*** *(2010.01)* ***H01M 4/58*** *(2010.01)*

(52) Cooperative Patent Classification (CPC):
**H01M 4/36; H01M 4/48; H01M 4/58;**
**H01M 10/0567;** Y02E 60/10

(86) International application number:
**PCT/JP2022/030426**

(87) International publication number:
**WO 2023/026852 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.08.2021 JP 2021136372**

(71) Applicant: **SHIN-ETSU CHEMICAL CO., LTD.**
**Tokyo 1000005 (JP)**

(72) Inventors:
- **KANESATO Shuhei**
  **Tokyo 100-0005 (JP)**
- **HIROSE Takakazu**
  **Annaka-shi, Gunma 379-0125 (JP)**
- **OSAWA Yusuke**
  **Annaka-shi, Gunma 379-0125 (JP)**
- **KIYOMORI Ayumu**
  **Joetsu-shi, Niigata 942-8601 (JP)**
- **AOKI Shotaro**
  **Joetsu-shi, Niigata 942-8601 (JP)**

(74) Representative: **Sonnenhauser, Thomas Martin**
**Wuesthoff & Wuesthoff**
**Patentanwälte und Rechtsanwalt PartG mbB**
**Schweigerstraße 2**
**81541 München (DE)**

(54) **NONAQUEOUS ELECTROLYTE AND NONAQUEOUS ELECTROLYTE SECONDARY BATTERY**

(57) The present invention is a non-aqueous electrolyte used for a non-aqueous electrolyte secondary battery, including a silane compound represented by the following general formula (1). By this configuration, a highly safe non-aqueous electrolyte and a non-aqueous electrolyte secondary battery even after charge and discharge are provided:

$$Si(R^1)_l(R^2)_m(R^3)_{4-l-m} \qquad (1)$$

wherein $R^1$ represents a heteroaryl group having 4 to 20 carbon atoms; $R^2$ represents an alkenyl group or an alkynyl group having 2 to 20 carbon atoms; $R^3$ represents an alkyl group having 1 to 20 carbon atoms; and "l" and "m" each independently represents an integer of 1 to 3, provided that $2 \leq l+m \leq 4$ is satisfied.

EP 4 394 983 A1

## Description

### TECHNICAL FIELD

The present invention relates to a non-aqueous electrolyte and a non-aqueous electrolyte secondary battery.

### BACKGROUND ART

In recent years, small electronic devices represented by mobile terminals have become widely used, and further size reduction, weight reduction, and lifetime extension are strongly required. For such market requirements, in particular, development of a small, lightweight secondary battery that can yield high energy density is in progress. This secondary battery is investigated to be applied for not only small electronic devices but also large electronic devices represented by automobiles, and additionally power storage systems represented by a house.

Among these, a lithium-ion secondary battery is highly promising because the size reduction and increase in capacity can be easily achieved, and it can yield higher energy density than a lead battery or a nickel-cadmium battery.

The above lithium-ion secondary battery includes a positive electrode, a negative electrode, a separator, and non-aqueous electrolyte liquid.

In the non-aqueous electrolyte liquid, various additives are used for the purpose of obtaining stability and improving electrical properties of a non-aqueous electrolyte secondary battery. As these additives, 1,3-propanesultone (e.g., refer to Patent Document 1), vinyl ethylene carbonate (e.g., refer to Patent Document 2), vinylene carbonate (e.g., refer to Patent Document 3), fluoroethylene carbonate (FEC) (e.g., refer to Patent Document 4) and the like have been proposed. Such additives form a stable solid electrolyte interphase (SEI) film on the surface of negative electrodes, and thus can suppress reductive decomposition of the electrolyte liquid.

By the way, it is known that, in a non-aqueous electrolyte secondary battery using a silicon-based negative electrode material or the like, the SEI film containing Li is formed and decomposed repeatedly in each cycle on a silicon surface layer by repeated charge and discharge. As a result, the surface area of the negative electrode material increases, which causes destabilization. Also, Li used for formation of the SEI film is constantly supplemented from the side of positive electrode, leading to potential increase. Consequently, safety is significantly lowered.

### CITATION LIST

### PATENT LITERATURE

Patent Document 1: JP S63-102173 A
Patent Document 2: JP H04-87156 A
Patent Document 3: JP H05-74486 A
Patent Document 4: JP 2006-134719 A

### SUMMARY OF INVENTION

### TECHNICAL PROBLEM

The present invention was made in view of the above-mentioned problem, and has for its object to provide a highly safe non-aqueous electrolyte and a non-aqueous electrolyte secondary battery even after charge and discharge.

### SOLUTION TO PROBLEM

For solving the above problem, the present invention provides a non-aqueous electrolyte used for a non-aqueous electrolyte secondary battery, including a silane compound represented by the following general formula (1):

$$Si(R^1)_l(R^2)_m(R^3)_{4-l-m} \qquad (1)$$

wherein $R^1$ represents a heteroaryl group having 4 to 20 carbon atoms; $R^2$ represents an alkenyl group or an alkynyl group having 2 to 20 carbon atoms; $R^3$ represents an alkyl group having 1 to 20 carbon atoms; and "l" and "m" each independently represents an integer of 1 to 3, provided that $2 \leq 1+m \leq 4$ is satisfied.

The silane compound contained in the non-aqueous electrolyte of the present invention contains the heteroaryl

group, and such heteroaryl group improves decomposability of the silane compound and reactivity of the decomposed silane compound. Such decomposed silane compound forms a good quality coating film (SEI film) on a positive electrode and negative electrode, so that the surface reactivity of active material to the electrolyte liquid can be suppressed. Consequently, by using such non-aqueous electrolyte in a secondary battery, it is possible to produce a highly safe non-aqueous electrolyte secondary battery even after charge and discharge.

At this time, the silane compound preferably has a lowest unoccupied molecular orbital energy level of -0.40 eV or less.

With such energy level, the decomposability of the silane compound is improved, thereby a good quality coating film (SEI film) is easily formed.

Further, the silane compound preferably has a highest occupied molecular orbital energy level of -8.8 eV or more.

With such energy level, the decomposability of the silane compound is improved, thereby a good quality coating film (SEI film) is easily formed.

Furthermore, a content of the silane compound in the non-aqueous electrolyte is preferably 0.1% by mass to 5.0% by mass.

Within such content, the coating film (SEI film) is sufficiently formed, and thus the surface reactivity of the active material is easily suppressed. In addition, increase in resistance due to excessive formation of the coating film (SEI film) is easily prevented.

The present invention also provides a non-aqueous electrolyte secondary battery including a positive electrode, a negative electrode, and the above non-aqueous electrolyte.

Such non-aqueous electrolyte secondary battery includes the non-aqueous electrolyte of the present invention, and thus it is possible to produce a highly safe non-aqueous electrolyte secondary battery even after charge and discharge.

In this case, negative electrode active material particles in the negative electrode are preferably silicon oxide particles coated with carbon layers. Moreover, in this case, the silicon oxide particles preferably contain $Li_2SiO_3$ which is crystalline.

As described above, the non-aqueous electrolyte of the present invention can be used in a secondary battery including silicon oxide particles coated with carbon layers as the negative electrode active material particles. Further, such crystalline $Li_2SiO_3$ can be made difficult to be eluted in an aqueous slurry.

## ADVANTAGEOUS EFFECTS OF INVENTION

The silane compound contained in the non-aqueous electrolyte of the present invention contains the heteroaryl group, and such heteroaryl group improves the decomposability of the silane compound and the reactivity of the decomposed silane compound. The decomposed silane compound forms a good quality coating film (SEI film) on the positive electrode and negative electrode, so that the surface reactivity of the active material to the electrolyte liquid can be suppressed. Accordingly, by using such non-aqueous electrolyte in a secondary battery, it is possible to produce a highly safe non-aqueous electrolyte secondary battery even after charge and discharge.

## DESCRIPTION OF EMBODIMENTS

As described above, it has been required to develop a highly safe non-aqueous electrolyte and a non-aqueous electrolyte secondary battery even after charge and discharge.

The present inventors made intensive investigations for achieving the above object, and as a result, found that the above object can be achieved by introducing a heteroaryl group, and further an alkenyl group or an alkynyl group into a silane compound. Thereby, the present invention was completed.

That is, the present invention is a non-aqueous electrolyte used for a non-aqueous electrolyte secondary battery, including a silane compound represented by the following general formula (1):

$$Si(R^1)_l(R^2)_m(R^3)_{4-l-m} \qquad (1)$$

wherein $R^1$ represents a heteroaryl group having 4 to 20 carbon atoms; $R^2$ represents an alkenyl group or an alkynyl group having 2 to 20 carbon atoms; $R^3$ represents an alkyl group having 1 to 20 carbon atoms; and "l" and "m" each independently represents an integer of 1 to 3, provided that $2 \leq l+m \leq 4$ is satisfied.

Hereinafter, embodiments of the present invention will be described, but the present invention is not limited thereto.

### Silane Compound

As described above, the non-aqueous electrolyte of the present invention is a non-aqueous electrolyte used

for a non-aqueous electrolyte secondary battery, including the silane compound represented by the following general formula (1) (hereinafter, also referred to as "the compound (1)".

$$Si(R^1)_l(R^2)_m(R^3)_{4-l-m} \qquad (1)$$

In the above general formula (1), $R^1$ represents a heteroaryl group having 4 to 20, preferably 4 to 10, and more preferably 4 to 6 carbon atoms.

Specific examples of the heteroaryl group of $R^1$ include nitrogen-containing heteroaryl group groups such as a 2-pyridyl group, a 3-pyridyl group, a 4-pyridyl group, a 2-pyrazyl group, a 2-pyrimidyl group, a 4-pyrimidyl group, a 5-pyrimidyl group, a 3-pyridazyl group, a 4-pyridazyl group, a 4-(1,2,3-triazyl group), a 3-(1,2,4-triazyl) group, a 5-(1,2,4-triazyl) group, a 6-(1,2,4-triazyl) group, a 2-(1,3,5-triazyl) group, a 2-quinolyl group, a 2-quinoxalyl group, a 2-quinazolyl group, a 3-cinnolyl group, a 1-isoquinolyl group, a 3-isoquinolyl group, and a 1-phthalazyl group; oxygen-containing heteroaryl group groups such as a 2-furyl group, a 3-furyl group, a 2-benzofuryl group, a 3-benzofuryl group, and a 1-isobenzofuryl group; sulfur-containing heteroaryl groups such as a 2-thienyl group, a 3-thienyl group, a 2-benzothienyl group, and a 3-benzothienyl group; and heteroaryl groups containing two or more hetero atoms such as a 2-oxazolyl group, a 5-oxazolyl group, a 3-isoxazolyl group, a 5-isoxazolyl group, a 2-benzoxazolyl group, a 3-benzoisoxazolyl group, a 2-thiazolyl group, and a 2-benzothiazolyl group.

Among these, a 2-pyridyl group, a 2-furyl group, and a 2-thienyl group are preferred, in view of ensuring the decomposability of the silane compound and the reactivity of the decomposed silane compound.

Such heteroaryl groups improve the decomposability of the silane compound and the reactivity of the decomposed silane compound. The decomposed silane compound forms a good quality coating film (SEI film) on the positive electrode and negative electrode, and thus it is thought that the surface reactivity of the active material to the electrolyte liquid is suppressed.

In the general formula (1), $R^2$ represents an alkenyl group or an alkynyl group having 2 to 20, preferably 2 to 10, and more preferably 2 to 5 carbon atoms.

Specific examples of the alkenyl group of $R^2$ include linear alkenyl groups such as a vinyl group, an n-propenyl group, an n-butenyl group, an n-pentenyl group, an n-hexenyl group, an n-heptenyl group, an n-octenyl group, an n-nonenyl group, an n-decenyl group, an n-undecenyl group, and an n-dodecenyl group; and branched alkenyl groups such as an isopropenyl group, an isobutenyl group, an isopentenyl group, an isohexenyl group, an isoheptenyl group, an isooctenyl group, an isononyl group, an isodecenyl group, and an isoundecyl group.

Among these, a vinyl group and an n-propenyl group are preferred, in view of ensuring the decomposability of the silane compound, and the reactivity of the decomposed silane compound.

Specific examples of the alkynyl group of $R^2$ include linear alkynyl groups such as an ethynyl group, a 1-propynyl group, a 1-butynyl group, a 1-pentynyl group, a 1-hexynyl group, a 1-heptynyl group, a 1-octynyl group, a 1-nonynyl group, a 1-decynyl group, a 1-undecynyl group, and a 1-dodecynyl group; and branched alkynyl groups such as a 3-methyl-1-butynyl group, a 3,3-dimethyl-1-butynyl group, a 3-methyl-1-pentynyl group, a 4-methyl-1-pentynyl group, a 3,3-dimethyl-1-pentynyl group, a 3,4-dimethyl-1-pentynyl group, and a 4,4-dimethyl-1-pentynyl group.

Among these, an ethynyl group, a 1-propynyl group, and a 1-butynyl group are preferred, in view of ensuring the decomposability of the silane compound, and the reactivity of the decomposed silane compound.

Such alkenyl groups or alkynyl groups improve the decomposability of the silane compound and the reactivity of the decomposed silane compound. The decomposed silane compound forms a good quality coating film (SEI film) on the positive electrode and negative electrode, and thus it is thought that the surface reactivity of the active material to the electrolyte liquid is suppressed.

In the general formula (1), $R^3$ represents an alkyl group having 1 to 20, preferably 1 to 10, and more preferably 1 to 5 carbon atoms.

Specific examples of the alkyl group of $R^3$ include linear alkyl groups such as a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, and an n-dodecyl group; and branched alkyl groups such as an isopropyl group, an isobutyl group, a sec-butyl group, a tert-butyl group, an isopentyl group, a neopentyl group, an isohexyl group, an isoheptyl group, an isooctyl group, a tert-octyl group, an isononyl group, an isodecyl group, and an isoundecyl group.

Among these, a methyl group is preferred in view of promoting reaction between the silane compounds and its small steric hindrance.

In the general formula (1), "l" and "m" each independently represents an integer of 1 to 3, and "l" and "m" are integers satisfying $2 \leq l+m \leq 4$. In view of forming a good quality coating film (SEI film), in the general formula (1), "l" and "m" each independently represents an integer of 1 to 3, and more preferably, "l" and "m" are integers satisfying $l+m = 4$.

Specific examples of the compound (1) include 2-pyridyl trivinylsilane, di(2-pyridyl)divinylsilane, tri(2-pyridyl)vinylsilane, methyldivinyl-2-pyridylsilane, di(2-pyridyl)methylvinylsilane, 2-furyltrivinylsilane, di(2-furyl)divinylsilane, tri(2-furyl)vinylsilane, divinyl-2-furylmethylsilane, di(2-furyl)methylvinylsilane, 2-thienyltrivinylsilane, di(2-thienyl)divinylsilane, tri(2-thienyl)vinylsilane, divinylmethyl-2-thienylsilane, di(2-thienyl)methylvinylsilane, 3-pyridyltrivinylsilane, di(3-pyridyl)divinylsilane, tri(3-pyridyl)vinylsilane, divinylmethyl-3-pyridylsilane, di(3-pyridyl)methylvinylsilane, 3-furyltrivinylsilane, di(3-furyl)divinylsilane, tri(3-furyl)vinylsilane, divinyl-3-furylmethylsilane, di(3-furyl)methylvinylsilane, 3-thienyltrivinylsilane, di(3-thienyl)divinylsilane, tri(3-thienyl)vinylsilane, divinylmethyl-3-thienylsilane, di(3-thienyl)methylvinylsilane, 2-pyridyltriethynylsilane, diethynyl di(2-pyridyl)silane, ethynyl tri(2-pyridyl)silane, diethynylmethyl-2-pyridylsilane, di(2-pyridyl)ethynylmethylsilane, 2-furyltriethynylsilane, diethynyl di(2-furyl)silane, ethynyl tri(2-furyl)silane, diethynyl-2-furylmethylsilane, ethynyl di(2-furyl)methylsilane, 2-thienyl triethynylsilane, diethynyl di(2-thienyl)silane, ethynyl tri(2-thienyl)silane, diethynylmethyl-2-thienylsilane, ethynylmethyl di(2-thienyl)silane, 3-pyridyl triethynylsilane, diethynyl di(3-pyridyl)silane, ethynyl tri(3-pyridyl)silane, diethynylmethyl-3-pyridylsilane, di(3-pyridyl)ethynylmethylsilane, 3-furyl triethynylsilane, diethynyl di(3-furyl)silane, ethynyl tri(3-furyl)silane, diethynylmethyl-3-furylsilane, ethynyl di(3-furyl)methylsilane, 3-thienyltriethynylsilane, diethynyl di(3-thienyl)silane, ethynyl tri(3-thienyl)silane, diethynylmethyl-3-thienylsilane, and di(3-thienyl)ethynylmethylsilane.

Note that the silane compound represented by the above general formula (1) can be obtained by, for example, reacting an organometallic reagent prepared from furan and n-butyllithium, and vinyl halosilane.

Content in Non-aqueous Electrolyte

The content of the compound (1) in the non-aqueous electrolyte liquid is preferably 0.1% by mass to 5.0% by mass, more preferably 0.1 by mass to 4.0% by mass, and further preferably 0.1% by mass to 2.0% by mass. Within such content, the coating film (SEI film) is sufficiently formed, and thus the surface reactivity of the active material is easily suppressed. In addition, increase in resistance due to excessive formation of the coating film (SEI film) is easily prevented.

Lowest Unoccupied Molecular Orbital (LUMO) Energy Level

The lowest unoccupied molecular orbital (LUMO) energy level of the silane compound (compound (1)) is preferably - 0.40 eV or less, more preferably -0.60 eV or less, still more preferably -0.70 eV or less, and particularly preferably -0.85 eV or less. The LUMO energy level is related to reductive decomposability of the silane compound. With such energy level, the decomposability of the silane compound is improved, so that a good quality coating film (SEI film) is easily formed.

Highest Occupied Molecular Orbital (HOMO) Energy Level

The highest occupied molecular orbital (HOMO) energy level of the silane compound is preferably -8.8 eV or more, more preferably -8.0 eV or more, still more preferably -7.5 eV or more, and particularly preferably -7.0 eV or more. The HOMO energy level is related to oxidative decomposability of the silane compound. With such energy level, the decomposability of the silane compound is improved, so that a good quality coating film (SEI film) is easily formed.

Method for Calculating Energy Level

The energy levels of the lowest unoccupied molecular orbital (LUMO) and the highest occupied molecular orbital (HOMO) can be determined by quantum chemical calculation. As a software for the quantum chemical calculation, Gaussian, GAMESS, or the like can be used. As a calculation method, a density functional method is suitably used in view of the calculation accuracy and calculation cost. As an exchange-correlation functional, B3LYP is suitably used. As a basis function, 6-311+G(d,p) is suitably used.

<Non-aqueous Electrolyte Secondary Battery>

Non-aqueous Electrolyte

The non-aqueous electrolyte of the present invention is prepared by dissolving an electrolyte salt in a non-aqueous solvent, contains the compound (1), and may contain other materials as an additive. At least a part of an active material layer or the separator is impregnated with the non-aqueous electrolyte.

Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, or tetrahydrofuran. Among these, in view of providing better properties, it is desirable to use at least one or more of ethylene carbonate, propylene carbonate, dimethyl carbonate, diethyl carbonate, and ethyl methyl carbonate. Moreover, in this

case, by combinedly using a high viscosity solvent such as ethylene carbonate or propylene carbonate, and a low viscosity solvent such as dimethyl carbonate dimethyl carbonate, ethyl methyl carbonate, or diethyl carbonate, dissociation property or ionic mobility of the electrolyte salt is improved. Thus, superior properties can be obtained.

In the case when an alloy-based negative electrode containing a silicon-based negative electrode material is used, at least one of a halogenated chain carbonate ester or halogenated cyclic carbonate ester is preferably contained, particularly as a solvent. Thereby, during charge and discharge, especially during charging, a stable coating film is formed on the surface of the negative electrode active material. Herein, the halogenated chain carbonate ester refers to a chain carbonate ester containing a halogen as a constituent element (at least one hydrogen is substituted with a halogen). In addition, the halogenated cyclic carbonate ester refers to a cyclic carbonate ester containing a halogen as a constituent element (i.e., at least one hydrogen is substituted with a halogen).

The type of the halogen is not particularly limited, and fluorine is preferred in view of forming a coating film having better quality as compared with other halogens. The larger the number of halogens, the more desirable, because more stable coating film can be obtained, and decomposition reaction of the electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolan-2-on, and 4,5-difluoro-1,3-dioxolan-2-on.

Examples of the electrolyte salt include any one or more of light metal salts such as a lithium salt. Examples of the lithium salt include lithium hexafluorophosphate ($LiPF_6$) and lithium tetrafluoroborate ($LiBF_4$).

A content of the electrolyte salt in the non-aqueous solvent is preferably 0.5 mol/kg or more and 2.5 mol/kg or less, more preferably 0.8 mol/kg or more and 2.0 mol/kg or less, and further preferably 0.8 mol/kg or more and 1.5 mol/kg or less, in view of providing high ionic conductivity.

The non-aqueous electrolyte of the present invention may contain an unsaturated carbon bond cyclic carbonate ester, sultone (cyclic sulfonate ester), and an acid anhydride as additional additives other than the compound (1). The unsaturated carbon bond cyclic carbonate ester may be contained in view of forming a stable coating film shape on the surface of the negative electrode during charge and discharge, and suppressing decomposition reaction of the non-aqueous electrolyte. Examples thereof include vinylene carbonate and vinylethylene carbonate. Further, the sultone may be contained in view of improving the chemical stability of battery. Examples thereof include propanesultone and propenesultone. In addition, the acid anhydride may be contained in view of improving the chemical stability of the electrolyte. Examples thereof include propanedisulfonic acid anhydride.

The non-aqueous electrolyte secondary battery of the present invention includes a positive electrode and a negative electrode, in addition to the above non-aqueous electrolyte.

Positive Electrode

The positive electrode is configured to have a positive electrode active material layer on both sides or one side of a positive electrode current collector, for example.

Herein, the positive electrode current collector is formed of, for example, an electroconductive material such as aluminum.

On the other hand, the positive electrode active material layer contains any one or two or more positive electrode materials capable of absorbing and desorbing lithium ions. Other materials such as a binder, conductive assistant, and dispersant may also be contained according to the design. In this case, as the binder and conductive assistant, for example, the same ones as those used as the negative electrode binder and negative electrode conductive assistant described below may be used.

Examples of the positive electrode material include a composite oxide containing lithium and a transition metal element, and a lithium-containing compound such as a phosphate compound containing lithium and a transition metal element, in view of providing high battery capacity and excellent cycle characteristics. The transition metal element is preferably nickel, iron, manganese, or cobalt. The lithium-containing compound is a compound containing at least one or more of these transition metal elements. The chemical formula of the lithium-containing compound is represented by, for example, $LixM1O_2$ or $LiyM_2PO_4$. In the formula, M1 and M2 represent at least one or more transition metal elements. The values of "x" and "y" are different depending on the battery charge and discharge state, and typically are numbers satisfying $0.05 \leq x \leq 1.10$ and $0.05 \leq y \leq 1.10$.

Specific examples of the composite oxide containing lithium and a transition metal element include a lithium cobalt composite oxide ($Li_xCoO_2$), a lithium nickel composite oxide ($Li_xNiO_2$), a lithium nickel cobalt composite oxide, and a lithium nickel cobalt composite oxide (a lithium nickel cobalt aluminum composite oxide; NCA, a lithium nickel cobalt manganese composite oxide + NCM) .

Specific examples of the phosphate compound containing lithium and a transition metal element include a lithium iron phosphate compound ($LiFePO_4$) and a lithium iron manganese phosphate compound ($LiFe_{1-u}Mn_uPO_4$, provided that $0<u<1$). When these positive electrode materials are used, high battery capacity can be obtained, and

also excellent cycle characteristics can be obtained.

Negative Electrode

The negative electrode is configured to have a negative electrode active material layer on a negative electrode current collector, for example. The negative electrode active material layer may be provided on both sides or only one side of the negative electrode current collector.

Negative Electrode Current Collector

The negative electrode current collector is constituted of an excellent electroconductive material having high mechanical strength. Examples of the electroconductive material which can be used for the negative electrode current collector include copper (Cu) and nickel (Ni). The electroconductive material is preferably a material which does not form an intermetallic compound with lithium (Li).
The negative electrode current collector preferably contains carbon (C) and sulfur (S) other than the copper (Cu) and nickel (Ni) in view of improving the physical strength of the negative electrode current collector. Particularly, in the case when an active material layer expanding during charging is included, inclusion of the above element in the current collector has an effect of suppressing deformation of electrode including the current collector. A content of the above contained element is not particularly limited, and in view of providing higher deformation suppressing effect, each of the content is preferably 100 mass ppm or less. By such deformation suppressing effect, cycle characteristics can be more improved.
The surface of the negative electrode current collector may be roughened or may not be roughened. Examples of the roughened negative electrode current collector include a metal foil which has been subjected to electrolytic treatment, embossing treatment, or chemical etching treatment. Examples of the unroughened negative electrode current collector include rolled metal foil.

Negative Electrode Active Material Layer

The negative electrode active material layer contains negative electrode active material capable of absorbing (inserting) and desorbing lithium ions. In view of battery design, the negative electrode active material layer may further contain other materials such as a negative electrode binder (binder) and a conductive assistant. The negative electrode active material contains negative electrode active material particles. Examples of the negative electrode active material particles include carbon compound particles (carbon-based negative electrode active material), silicon compound particles (silicon-based negative electrode active material), germanium compound particles (germanium-based negative electrode active material), and tin compound particles (tin-based negative electrode active material). Among these, the carbon compound particles (carbon-based negative electrode active material) or the silicon compound particles (silicon-based negative electrode active material) are preferably contained, the silicon compound particles (silicon-based negative electrode active material) are more preferably contained, and particularly preferably, silicon compound particles containing an oxygen-containing silicon compound are contained.
The negative electrode active material contains the carbon compound particles (carbon-based negative electrode active material), the silicon compound particles (silicon-based negative electrode active material), the germanium compound particles (germanium-based negative electrode active material), the tin compound particles (tin-based negative electrode active material), and the like. Preferably, the negative electrode active material contains the carbon compound particles (carbon-based negative electrode active material) or the silicon compound particles (silicon-based negative electrode active material), more preferably the silicon compound particles (silicon-based negative electrode active material), and particularly preferably, silicon oxide material containing an oxygen-containing silicon compound. In the silicon compound $SiO_x$, "x" represents a compositional ratio between silicon and oxygen, and is preferably a number satisfying $0.8 \leq x \leq 1.2$ in view of the cycle characteristics and resistance of silicon oxide. Particularly, in the composition of $SiO_x$, "x" is preferably nearer to 1 for providing higher cycle characteristics. Note that the composition of the silicon compound in the present invention does not necessarily mean the purity of 100%, and a trace amount of impurity elements may be contained.
The silicon compound preferably contains as little crystalline Si as possible. Containing as little crystalline Si as possible can prevent reactivity to the electrolyte from becoming excessively high. As a result, it is possible to prevent worsening of battery characteristics.
The silicon compound contains Li, and desirably, a part of the silicon compound is silicate to form $Li_2SiO_3$. $Li_2SiO_3$ is crystalline, active in charging and discharging, and remains as $Li_2SiO_3$ in a slurry state, but changes into $Li_4SiO_4$ by repeated charge and discharge.
As the crystallinity of $Li_2SiO_3$ is higher, it is more difficult to be converted into $Li_4SiO_4$. On the other hand, when

$Li_2SiO_3$ has low crystallinity, it is easily eluted into a slurry. Thus, there is an optimal range of crystallinity.

Specifically, the negative electrode active material particles have a peak caused by a Si(111) crystal plane before charge and discharge of the negative electrode active material particles, the peak being determined by X ray diffraction using a Cu-Kα ray. The crystallite size corresponding to said crystal plane is 5.0 nm or less. And when an intensity of peak caused by the Si(111) crystal plane is represented by A, and an intensity of peak caused by a $Li_2SiO_3$(111) crystal plane is represented by B, the ratio A/B preferably satisfies the following formula (2).

$$0.4 \leq A/B \leq 1.0 \quad (2)$$

The expansion degree of Li silicate, and the crystallization degree of Si (for example, a crystallite size corresponding to the Si(111) crystal plane) can be observed by X-ray diffraction (hereinafter, also referred to as "XRD").

As an X-ray diffractometer, D8 ADVANCE manufactured by Bruker Corporation may be used. The measurement is performed by using a Cu Kα ray as an X ray source, and a Ni filter, with an output of 40 kV/40 mA, a slit width of 0.3°, and a step width of 0.008° for counting time of 0.15 seconds per step, to 10 to 40°.

The peak caused by the Si(111) crystal plane appears around 2θ=28.4° in an X-ray diffraction chart.

The crystallite size corresponding to the Si(111) crystal plane is preferably 5.0 nm or less, more preferably 4.0 nm or less, and still more preferably 2.5 nm or less. Desirably, the negative electrode active material particles are substantially amorphous.

The ratio of A/B, in which A represents the intensity of peak caused by the Si(111) crystal plane, and B represents the intensity of peak caused by the $Li_2SiO_3$(111) crystal plane, preferably satisfies 0.40≤A/B≤1.00, more preferably 0.45≤A/B≤0.75, and still more preferably 0.50≤A/B≤0.70. Herein, the peak caused by the $Li_2SiO_3$(111) crystal plane appears in the range of 2θ=17° to 21° in the X-ray diffraction chart.

A median size of the negative electrode active material determined by a laser diffraction method is preferably 5.0 μm or more and 15.0 μm or less, more preferably 5.5 μm or more and 10.0 μm or less, and still more preferably 6.0 μm or more and 8.0 μm or less, in view of controlling reaction with the electrolyte or suppressing expansion of the negative electrode active material caused by charge and discharge.

The negative electrode active material layer may include mixed negative electrode active material containing the silicon-based negative electrode active material and a carbon-based active material. Thereby, it is possible to decrease electrical resistance of the negative electrode active material layer and relax expansion stress caused by charge. Examples of the carbon-based active material include natural graphite, artificial graphite, hard carbon, and soft carbon.

The negative electrode active material layer of the present invention contains the negative electrode active material of the present invention capable of absorbing and desorbing lithium ions. In view of battery design, the negative electrode active material layer may further contain other materials such as a negative electrode binder (binder) or a conductive assistant.

As the negative electrode binder, for example, any one or more of polymer materials, and synthetic rubbers may be used. Examples of the polymer material include polyvinylidene fluoride, polyimide, polyamide-imide, aramid, polyacrylic acid, lithium polyacrylate, sodium polyacrylate, and carboxymethylcellulose. Examples of the synthetic rubber include styrene-butadiene-based rubber, fluorine-based rubber, and ethylene propylene diene.

Examples of the negative electrode conductive assistant include carbon microparticles, carbon black, acetylene black, graphite, ketjen black, carbon nanotube, and carbon nanofiber. Any one or more of these may be used.

The negative electrode active material layer is formed by an application method, for example. The application method is a method of applying a mixture dispersed in an organic solvent, water, or the like; the mixture being obtained by mixing a silicon-based negative electrode active material, binder, and as necessary, negative electrode conductive assistant and carbon-based active material.

Separator

The separator separates lithium metal or a positive electrode from a negative electrode, prevents electric short circuit caused by contact of both electrodes, and allows lithium ions to pass through. The separator is formed by, for example, a synthetic resin, or a porous film composed of ceramic, and may have a laminate structure in which two or more porous films are laminated. Examples of the synthetic resin include polytetrafluoroethylene, polypropylene, and polyethylene.

EXAMPLE

Hereinafter, the present invention will be more specifically described with reference to Examples and Comparative Examples. However, the present invention is not limited thereto.

<Common Subject Matter in Examples and Comparative Example>

HOMO and LUMO Energy Levels

The structure of the silane compound was optimized, and then HOMO and LUMO energy levels were calculated. Gaussian 16 was used as a software for quantum chemical calculation. Calculation was performed with the density functional method by using B3LYP as an exchange-correlation functional, and 6-311+G(d,p) as a basis function.

Example 1

Production of Negative Electrode

An electrolytic copper foil with 15 um thickness was used as a negative electrode current collector. The electrolytic copper foil contained carbon and sulfur at a concentration of 70 mass ppm, respectively.
A negative electrode mixture slurry was prepared by mixing KSC-7130 (silicon oxide particles containing $Li_2SiO_3$ and coated with carbon layers, median size of 6.5 pm, manufactured by Shin-Etsu Chemical Co., Ltd., refer to Journal of Power Sources 450(2020) 227699) as silicon-based negative electrode active material, artificial graphite (median size of 15 pm), carbon nanotube and carbon microparticles having a median size of about 50 nm as negative electrode conductive assistants, and sodium polyacrylate and carboxymethylcellulose as negative electrode binders at a dry mass ratio of 9.3:83.7:1:1:4:1, and then diluting the mixture with pure water.
The negative electrode mixture slurry was applied on the negative electrode current collector, and dried at 100°C for 1 hour in a vacuum atmosphere. An amount of negative electrode active material layer deposited per unit area (area density) on one side of the negative electrode after drying was 7.0 mg/cm$^2$.

Production of Positive Electrode

Next, a positive electrode was produced. 95 parts by mass of $LiNi_{0.7}Co_{0.25}Al_{0.05}O$, which is a lithium nickel cobalt composite oxide, as positive electrode active material, 2.5 parts by mass of a positive electrode conductive assistant, and 2.5 parts by mass of a positive electrode binder (polyvinylidene fluoride: PVDF) were mixed to prepare a positive electrode mixture. Then, the positive electrode mixture was dispersed in an organic solvent (N-methyl-2-pyrolidone: NMP) to prepare a paste slurry. Thereafter, the slurry was applied on both sides of the positive electrode current collector using a coating device having a die head, and dried with a hot air dryer. At this time, thickness of the positive electrode current collector was 15 um. Finally, compressive molding was performed with a roll press. Positive electrode density at this time was 20 mg/cm$^2$ on one side.

Preparation of Non-aqueous Electrolyte

As non-aqueous solvents, ethylene carbonate (EC) and dimethyl carbonate (DMC) were mixed, and then lithium hexafluorophosphate: LiPF6 was dissolved in the mixture as an electrolyte salt to prepare electrolyte liquid. In this case, the composition of the solvents was EC:DMC = 30:70 by volume ratio, and a content of the electrolyte salt in the solvent was 1 mol/kg. As an additive, 2.0% by mass of di(2-pyridyl)divinylsilane (PDVS) was added to prepare the non-aqueous electrolyte. The structural formula of PDVS is shown in Table 1.

Production of Non-aqueous Electrolyte Secondary Battery

Then, a battery was assembled as follows. The battery was designed to have a negative electrode utilization rate of 95%. The utilization rate can be calculated by the following formula.

Utilization rate= (positive electrode capacity - loss of negative electrode) / (negative electrode capacity - loss of negative electrode) x 100

Nail Penetration Safety Test

At first, for stabilizing the battery, charge and discharge was performed at 0.2 C for 2 cycles under a 25°C atmosphere. Thereafter, until 1, 100, 300, and 500 cycles, charge and discharge were performed at 0.7 C in charging and 0.5 C in discharging. At this time, a charge voltage was 4.3 V, discharge end voltage was 2.5 V, and charge

termination rate was 0.07 C.

The batteries after 1, 100, 300, and 500 cycles were fully charged, and a nail with a diameter of 2 mm was penetrated at a speed of 0.1 mm/sec to observe heat generation and firing behavior.

The safety was evaluated by the following criteria.

Very good: Neither firing nor heat generation occurred
Good: No firing occurred
Average: Firing occurred
Poor: Intense firing occurred

Examples 2 to 5

The same procedure as in Example 1 was performed except that the type of the additive (silane compound) was changed as shown in Tables 1 and 2. Note that FDVS stands for di(2-furyl)divinylsilane, TDVS stands for di(2-thienyl)divinylsilane, PTVS stands for 2-pyridyltrivinylsilane, and PDES stands for diethynyl di(2-pyridyl)silane. All of these correspond to the general formula (1).

Comparative Example 1

The same procedure as in Example 1 was performed except that the additive (silane compound) was not added.

[Table 1]

| Silane compound | PDVS | FDVS | TDVS | PTVS | PDES |
|---|---|---|---|---|---|
| Structural formula | 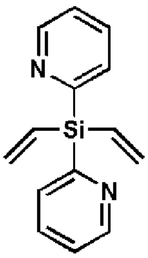 | 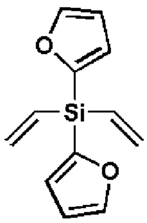 | 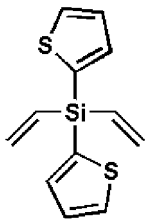 | 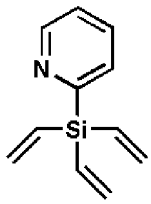 | 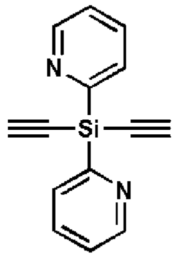 |

[Table 2]

| | **Non-aqueous electrolyte liquid** | **Quantum chemistry calculation** | | **Nail penetration safety test** | | | |
|---|---|---|---|---|---|---|---|
| | Silane compound | HOMO (eV) | LUMO (eV) | 1 cycle | 100 cycles | 300 cycles | 500 cycles |
| Example 1 | PDVS | -6.7344 | -1.3658 | Very good | Very good | Very good | Good |
| Example2 | FDVS | -6.2827 | -0.8526 | Very good | Very good | Good | Good |
| Example 3 | TDVS | -6.5510 | -1.0420 | Very good | Very good | Very good | Good |
| Example 4 | PTVS | -6.8376 | -1.2188 | Very good | Very good | Very good | Good |
| Example 5 | PDES | -6.8876 | -1.3391 | Very good | Very good | Good | Good |
| Comparative Example 1 | - | - | - | Very good | Good | Average | Poor |

As is obvious from the above results, it was confirmed that safety can be maintained even after repeated cycles, by adding the silane compound represented by the general formula (1) which contains the heteroaryl group to the non-aqueous electrolyte of the present invention. Decomposed products (coating films) of these silane compounds can suppress the surface reactivity of the active material to the electrolyte liquid.

It was suggested that the silane compound contained in the non-aqueous electrolyte of the present invention tends to have higher HOMO and lower LUMO as compared with vinylene carbonate (HOMO: -7.3881 eV, LUMO: -0.6123 eV), which is known as a representative additive, and has high decomposability and reactivity after the decomposition, thereby easily forms a good quality coating film (SEI film).

INDUSTRIAL APPLICABILITY

According to the present invention, a highly safe non-aqueous electrolyte even after charge and discharge can be provided.

It should be noted that the present invention is not limited to the above-described embodiments. The embodiments are just examples, and any examples that substantially have the same configuration and demonstrate the same functions and effects as those in the technical concept disclosed in claims of the present invention are included in the technical scope of the present invention.

## Claims

1. A non-aqueous electrolyte used for a non-aqueous electrolyte secondary battery, comprising a silane compound represented by a following general formula (1):

$$Si(R^1)_l(R^2)_m(R^3)_{4-l-m} \quad (1)$$

wherein $R^1$ represents a heteroaryl group having 4 to 20 carbon atoms; $R^2$ represents an alkenyl group or an alkynyl group having 2 to 20 carbon atoms; $R^3$ represents an alkyl group having 1 to 20 carbon atoms; and "l" and "m" each independently represents an integer of 1 to 3, provided that $2 \leq l+m \leq 4$ is satisfied.

2. The non-aqueous electrolyte according to claim 1, wherein the silane compound has a lowest unoccupied molecular orbital energy level of -0.40 eV or less.

3. The non-aqueous electrolyte according to claim 1 or 2, wherein the silane compound has a highest occupied molecular orbital energy level of -8.8 eV or more.

4. The non-aqueous electrolyte according to any one of claims 1 to 3, wherein a content of the silane compound in the non-aqueous electrolyte is 0.1% by mass to 5.0% by mass.

5. A non-aqueous electrolyte secondary battery comprising a positive electrode, a negative electrode, and the non-aqueous electrolyte according to any one of claims 1 to 4.

6. The non-aqueous electrolyte secondary battery according to claim 5, wherein a negative electrode active material particle in the negative electrode is a silicon oxide particle coated with a carbon layer.

7. The non-aqueous electrolyte secondary battery according to claim 6, wherein the silicon oxide particle contains $Li_2SiO_3$ which is crystalline.

**INTERNATIONAL SEARCH REPORT**

International application No. **PCT/JP2022/030426**

**A. CLASSIFICATION OF SUBJECT MATTER**

***H01M 10/0567***(2010.01)i; ***H01M 4/36***(2006.01)i; ***H01M 4/48***(2010.01)i; ***H01M 4/58***(2010.01)i
FI: H01M10/0567; H01M4/36 C; H01M4/36 E; H01M4/48; H01M4/58

According to International Patent Classification (IPC) or to both national classification and IPC

**B. FIELDS SEARCHED**

Minimum documentation searched (classification system followed by classification symbols)

H01M10/0567; H01M4/36; H01M4/48; H01M4/58

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | KR 10-2283808 B1 (CHEM ALLIANCE) 02 August 2021 (2021-08-02) | 1-7 |
| A | CN 110400969 A (BYD COMPANY LTD.) 01 November 2019 (2019-11-01) | 1-7 |
| A | US 2006/0269846 A1 (FERRO CORP.) 30 November 2006 (2006-11-30) | 1-7 |
| A | JP 2017-97952 A (SHIN-ETSU CHEMICAL CO., LTD.) 01 June 2017 (2017-06-01) | 6-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 October 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/030426**

| Patent document cited in search report | Publication date (day/month/year) | Patent family member(s) | Publication date (day/month/year) |
|---|---|---|---|
| KR 10-2283808 B1 | 02 August 2021 | (Family: none) | |
| CN 110400969 A | 01 November 2019 | (Family: none) | |
| US 2006/0269846 A1 | 30 November 2006 | (Family: none) | |
| JP 2017-97952 A | 01 June 2017 | US 2019/0097223 A1 | |
| | | WO 2017/085911 A1 | |
| | | EP 3364483 A1 | |
| | | TW 201735422 A | |
| | | CN 108292748 A | |
| | | KR 10-2018-0080239 A | |
| | | CN 113178559 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S63102173 A
- JP H0487156 A
- JP H0574486 A
- JP 2006134719 A


### Non-patent literature cited in the description


- *Journal of Power Sources,* 2020, vol. 450, 227699